# EUROPEAN PATENT APPLICATION

(11) **EP 3 476 857 A1**
(43) Date of publication of application: **01.05.2019**
(21) Application number: 17815317.7
(22) Date of filing: 16.06.2017
(51) Int. Cl.: C07F 15/00

(54) **METHOD FOR PRODUCING CYCLOMETALATED IRIDIUM COMPLEX, AND NOVEL IRIDIUM COMPOUND SUITABLY USED FOR SAID METHOD**

(30) Priority: 24.06.2016 JP 2016125400
(71) Applicant: National Institute of Advanced Industrial Science and Technology, Tokyo 100-8921 (JP); Tanaka Kikinzoku Kogyo K.K., Chiyoda-ku Tokyo 100-6422 (JP)
(72) Inventor: KONNO Hideo, Tsukuba-shi Ibaraki 305-8565 (JP); TANIUCHI Junichi, Tsukuba-shi Ibaraki 300-4247 (JP); KOBAYASHI Rumi, Tsukuba-shi Ibaraki 300-4247 (JP); MASAHIRO Yasushi, Tokyo 100-6422 (JP)
(74) Representative: Hoffmann Eitle
(86) International application number: PCT/JP2017/022405
(87) International publication number: WO 2017/221849

(57) **Abstract**

A method for producing a cyclometalated iridium complex by allowing an iridium compound and an aromatic bidentate ligand to react each other. In particular, the method is characterized by allowing a β-diketonate salt represented by General Formula (4) to coexist in a reaction system for reaction. By adding the β-diketonate salt into the reaction system, stability of a reaction intermediate product between the iridium compound and the aromatic bidentate ligand improves. Therefore, yield of the cyclometalated iridium complex can improve. The cyclometalated iridium complex produced in accordance with the present invention is useful as a phosphorescent material for use in an organic EL element, for example.

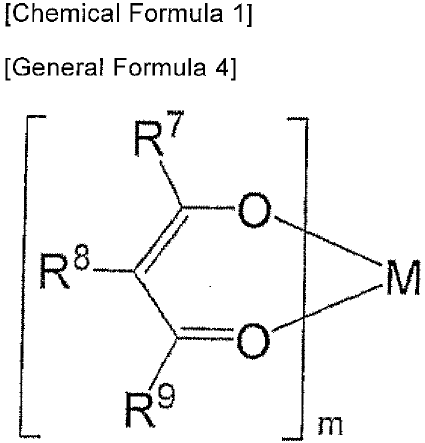

## Description

### [Technical Field]

The present invention relates to a technique for producing, at higher yield, a high purity cyclometalated iridium complex to be used as a phosphorescent material for use in organic electrolytic light-emitting (EL) elements, organic electrochemical light-emitting (ECL) elements, light-emitting sensors, photosensitive dyes, photocatalysts, light-emitting probes, and various light sources, for example. The present invention also relates to an iridium compound preferably used for the method for producing the cyclometalated iridium complex.

### [Related Art]

A cyclometalated iridium complex to be used as a phosphorescent material for use in an organic electrolytic light-emitting (EL) element, for example, is a generic term of an organic iridium complex where a multidentate ligand is coordinated in a ring shape around an iridium atom to have at least one iridium-carbon bond. An organic EL element using a phosphorescent material exhibits higher luminous efficiency three to four times of luminous efficiency of an organic EL element using a conventional luminescence material. A cyclometalated iridium complex is a material essential for achieving higher efficiency and more energy saving in an organic EL element. Many cyclometalated iridium complexes that can be applied as phosphorescent materials are known, including, for example, a cyclometalated iridium complex (see Chemical Formulas 1) where an aromatic bidentate ligand, such as 2-phenylpyridine and 1-phenylisoquinoline, is coordinated.

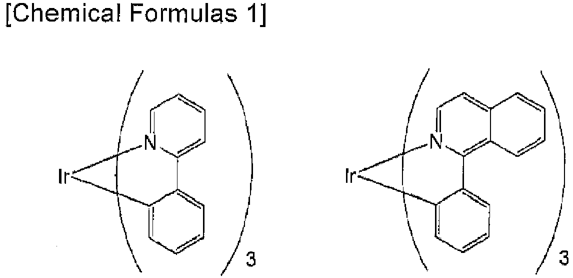

As a method for producing a cyclometalated iridium complex described above, Patent Document 1 discloses a method including allowing an iridium compound serving as a raw material, i.e., sodium bis (acetylacetonate) dichloro iridate (III), and an aromatic bidentate ligand, such as 2-phenylpyridine and 1-phenyl isoquinoline, to react each other.

### [Related Art Documents]

### [Patent Documents]

- [Patent document 1]: WO 2004/085449

### [SUMMARY]

### [Problems to be Solved by the Invention]

However, according to knowledge of the inventors, when the method described in Patent Document 1 is used to produce a cyclometalated iridium complex containing 2-phenylpyridine or 1-phenyl isoquinoline as a ligand, a large amount of an aromatic bidentate ligand is required. Specifically, it has been known that a significantly excessive amount of an aromatic bidentate ligand is required per mole of an iridium raw material, such as ten times moles, for producing a cyclometalated iridium complex with practical efficiency. Many aromatic bidentate ligands are often expensive. Therefore, the method increases a cost of producing a cyclometalated iridium complex.

With respect to the above described problem on an amount of use of an aromatic bidentate ligand in the method described in Patent Document 1, even when the amount of use is not so excessive, a cyclometalated iridium complex can be generated to some extent. However, in this case, byproducts, such as halogen cross-linked iridium dimers, are generated together with the cyclometalated iridium complex, preventing obtaining the desired cyclometalated iridium complex only. Instead, yield of the byproducts often increases higher than yield of the desired cyclometalated iridium complex, revealing another problem that the cyclometalated iridium complex cannot be obtained efficiently.

According to the further investigations by the inventors, such a case has been also revealed that, with the method described in Patent Document 1, when another ligand than 2-phenylpyridine and 1-phenyl isoquinoline is allowed to react, side reaction advances, i.e., a reactant decomposes, for example. In this case, the desired cyclometalated iridium complex can be obtained only at lower yield. In the above described case, even when an amount of use of a ligand is increased, the yield of the desired cyclometalated iridium complex does not improve.

In view of the above described problems, the present invention has an object to disclose a method capable of producing, at higher yield, a high purity cyclometalated iridium complex to be preferably used as a phosphorescent material for use in an organic EL element, for example. The present invention also has an object to provide a new iridium compound preferably used for the production method.

### [Means of Solving the Problems]

To solve the problems described above, the present invention is a method for producing an iridium complex, in a method for producing a cyclometalated iridium complex represented by General Formula (3) described below including allowing an iridium compound represented by General Formula (1) described below and an aromatic bidentate ligand represented by General Formula (2) described below to react each other, including allowing a β-diketonate salt represented by General Formula (4) described below to coexist in a reaction system for reaction. 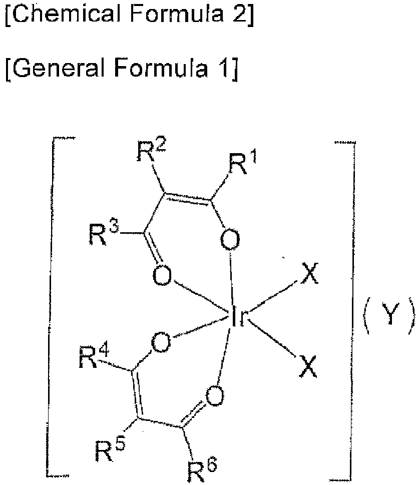 (In General Formula (1), Ir represents an iridium atom. O represents an oxygen atom. X represents a halogen atom. Y represents a counter cation. Each of R¹ to R⁶ is, independently, a hydrogen atom, an alkyl group, or an aryl group. Some or all of hydrogen atoms in the alkyl group or the aryl group may be substituted with halogen atoms. R¹ to R⁶ may each bond with adjacent ones to form a ring structure.) 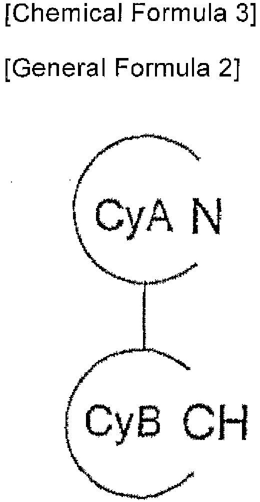 (In General Formula (2), N represents a nitrogen atom. C represents a carbon atom. H represents a hydrogen atom. CyA represents a ring group of a five-membered ring or a six-membered ring containing a nitrogen atom. CyB represents a ring group of a five-membered ring or a six-membered ring containing a carbon atom. CyA and CyB may bond each other to form a ring structure.) 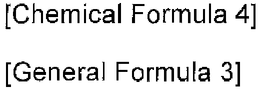 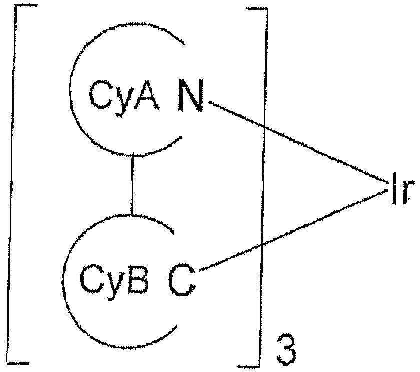 (In General Formula (3), Ir represents an iridium atom. N represents a nitrogen atom. C represents a carbon atom. X represents a halogen atom. CyA represents a ring group of a five-membered ring or a six-membered ring containing a nitrogen atom, and bonds with iridium via the nitrogen atom. CyB represents a ring group of a five-membered ring or a six-membered ring containing a carbon atom, and bonds with iridium via the carbon atom. CyA and CyB may bond each other to further form a ring structure.) 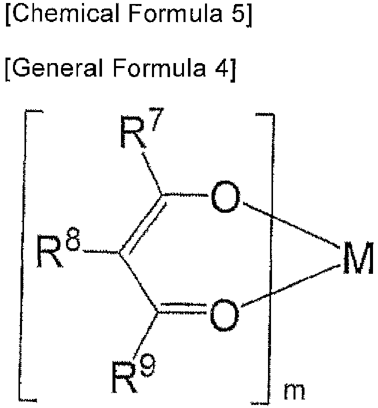 (In General Formula (4), M represents alkali metal or alkali earth metal. O represents an oxygen atom. For m, 1 or 2 is represented. When M is alkali metal, m = 1. When M is alkali earth metal, m = 2. Each of R⁷ to R⁹ is, independently, a hydrogen atom, an alkyl group, or an aryl group. Some or all of hydrogen atoms in the alkyl group or the aryl group may be substituted with halogen atoms. R⁷ to R⁹ may each bond with adjacent ones to form a ring structure.)

The present invention has been found as a result of diligent investigations by the inventors, for example, on a method for producing a cyclometalated iridium complex, and, in a method for producing a cyclometalated iridium complex including allowing the iridium compound represented by General Formula (1) described above, such as sodium bis (acetylacetonate) dichloro iridate (III), and an aromatic bidentate ligand to react each other, includes allowing a β-diketonate salt to coexist in a reaction system. According to the inventors, for example, when the β-diketonate salt is allowed to coexist in the reaction system, surprisingly, the reaction is activated, drastically improving yield of the cyclometalated iridium complex without significantly and excessively using an aromatic bidentate ligand.

It is still unknown why the method according to the present invention is capable of producing a cyclometalated iridium complex at higher yield, the inventors currently assume some reasons as described below.

That is, in synthesis reaction of the cyclometalated iridium complex (General Formula (3)), it is assumed that, when the iridium compound represented by General Formula (1) and the aromatic bidentate ligand represented by General Formula (2) react each other, a reaction intermediate product is generated. When the reaction intermediate product and the aromatic bidentate ligand react each other, the desired cyclometalated iridium complex is generated. For a factor of why yield of the cyclometalated iridium complex lowers in a formation reaction of the cyclometalated iridium complex via a reaction intermediate product, it is first assumed that reaction between the reaction intermediate product and the aromatic bidentate ligand is slower, allowing the reaction intermediate product to remain in the reaction system. While the reaction intermediate product remains, when the reaction intermediate product is thermally unstable, it is assumed that the reaction intermediate product decomposes, lowering the yield of the desired cyclometalated iridium complex.

For a reason of why the yield of the cyclometalated iridium complex improves by adding the β-diketonate salt in the reaction system, as described in the present invention, it is assumed that the β-diketonate salt acts to improve stability, described above, of the reaction intermediate product. Therefore, it is assumed that the reaction intermediate product would be less likely to decompose before the reaction intermediate product and the aromatic bidentate ligand react each other, improving the yield of the cyclometalated iridium complex. It is also assumed that the β-diketonate salt activates reaction between the reaction intermediate product and the aromatic bidentate ligand, further improving the yield of the cyclometalated iridium complex.

The method for producing the cyclometalated iridium complex, and the new iridium compound applicable to the production method, according to the present invention, will now be described in detail herein. Herein, (I) Iridium raw material, (II) Aromatic bidentate ligand, (III) β-diketonate salt, and (IV) Preferable conditions of reaction, configuring the present invention, are described. Further, herein presents (V) New iridium compound preferable for the method according to the present invention.

### (I) Iridium raw material

As described above, an iridium raw material applied in the present invention is the iridium compound represented by General Formula (1). In General Formula (1), Ir represents an iridium atom. O represents an oxygen atom.

X represents a halogen atom. Specifically, a chlorine atom, a bromine atom, or an iodine atom is preferable. A chlorine atom or a bromine atom is more preferable. A chlorine atom is particularly preferable.

Y represents a counter cation. A desired counter cation may be used, as long as the counter cation fully reduces electric charge of the iridium compound represented by General Formula (1) to 0 to form a salt. Among such counter cations, a monovalent cation is preferable. Specifically, such a counter cation may be an alkali metal ion, an ammonium ion, a quaternary ammonium ion, a phosphonium ion, a sulfonium ion, an imidazolium ion, a pyridinium ion, a piperidinium ion, a pyrrolidinium ion, or a proton, for example. An alkali metal ion, an ammonium ion, a quaternary ammonium ion, a phosphonium ion, or a sulfonium ion is preferable. An alkali metal ion is more preferable. A sodium ion or a potassium ion is particularly preferable.

The above descriptions on Ir, O, H, X, and Y are common to General Formulas (2) to (15).

Each of R¹ to R⁶ in General Formula (1) is, independently, a hydrogen atom, an alkyl group, or an aryl group. Some or all of hydrogen atoms in the alkyl group or the aryl group may be substituted with halogen atoms. R¹ to R⁶ may each bond with adjacent ones to form a ring structure. When each of R¹ to R⁶ is an alkyl group or an aryl group, a preferable range of each of the groups is identical to a range of an alkyl group or an aryl group bondable to CyA and CyB, described later.

For each of R¹, R³, R⁴, and R⁶, independently, an alkyl group or an aryl group is preferable. An alkyl group is more preferable. A methyl group, an isopropyl group, or an alkyl group substituted with halogen atoms (preferably, fluorine) is further preferable. A trifluoromethyl group is particularly preferable. When each of R¹, R³, R⁴, and R⁶, independently, is an alkyl group, within its preferable range, specifically, a methyl group, an ethyl group, an n-propyl group, an isopropyl group, an n-butyl group, an isobutyl group, a sec-butyl group, a tert-butyl group, or a trifluoromethyl group is preferable. For R¹, R³, R⁴, and, R⁶, R¹ and R³ may be different substituent groups, and R⁴ and R⁶ may be different substituent groups (i.e., R¹ # R³ and R⁴ # R⁶).

For each of R¹, R³, R⁴, and R⁶, a branch alkyl group is also preferable. In this case, in particular, it is preferable that at least either of R¹ and R³ be a branch alkyl group, and at least either of R⁴ and R⁶ be a branch alkyl group. It is more preferable that only either of R¹ and R³ be a branch alkyl group, and only either of R⁴ and R⁶ be a branch alkyl group. It is particularly preferable that one of R¹ and R³ be a branch alkyl group, and another one be a methyl group, and one of R⁴ and R⁶ be a branch alkyl group, and another one be a methyl group. An isopropyl group, an isobutyl group, a sec-butyl group, or a tert-butyl group is preferable as a branch alkyl group. An isopropyl group is more preferable as a branch alkyl group.

For each of R¹, R³, R⁴, and R⁶, an alkyl group substituted with halogen atoms (preferably, fluorine) is also preferable. In this case, in particular, it is preferable that at least either of R¹ and R³ be an alkyl group substituted with halogen atoms (preferably, fluorine), and at least either of R⁴ and R⁶ be an alkyl group substituted with halogen atoms (preferably, fluorine). It is more preferable that only either of R¹ and R³ be an alkyl group substituted with halogen atoms (preferably, fluorine), and only either of R⁴ and R⁶ be an alkyl group substituted with halogen atoms (preferably, fluorine). It is particularly preferable that one of R¹ and R³ be an alkyl group substituted with halogen atoms (preferably, fluorine), and another one be a methyl group, and one of R⁴ and R⁶ be an alkyl group substituted with halogen atoms (preferably, fluorine), and another one be a methyl group. For the alkyl group substituted with halogen atoms (preferably, fluorine), a monofluoromethyl group, a difluoromethyl group, or a trifluoromethyl group is preferable. A trifluoromethyl group is more preferable. A reason of the above description is that, by introducing an electron attractive group, i.e., halogen atoms (preferably, fluorine), to the iridium compound represented by General Formula (1), an iridium-oxygen bond of the iridium compound represented by General Formula (1) weakens, improving its reactive property (see Examples 4 and 5 described later).

For each of R² and R⁵, independently, a hydrogen atom or an alkyl group is preferable. A hydrogen atom or a methyl group is more preferable. A hydrogen atom is particularly preferable.

A cis body (General Formula (5)) and a trans body (General Formula (6)) are available for the iridium compound represented by General Formula (1) used in the production method according to the present invention. Either of the cis body and the trans body may be selectively used. A mixture of a cis body and a trans body may be used. 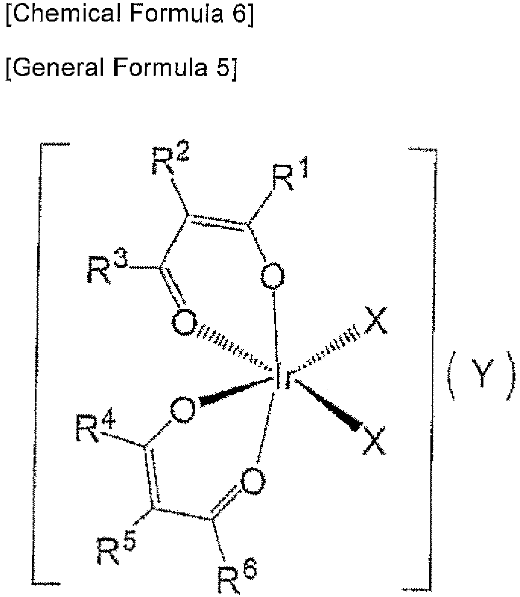 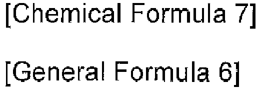 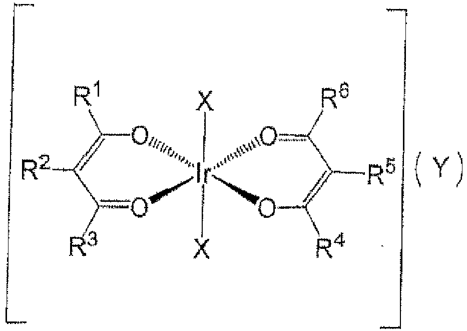 (Symbols used in and preferable ranges for General Formulas (5) and (6) are identical to the symbols used in and the preferable range for General Formula (1).)

When a ligand of the iridium compound represented by General Formula (1) has an asymmetric structure (i.e., R¹ # R³ and R⁴ # R⁶), a geometrical isomer further exists. For example, in a specific example of an iridium compound described later, i.e., (Ir-2), one of geometrical isomers illustrated in Table 8 exists (here, X = Cl, and Y representing a counter cation is omitted). The iridium compound to be used in the production method according to the present invention may be in a state consisting of one of the geometrical isomers described above, or may be a mixed state consisting of two or more kinds of the geometrical isomers. In the object of producing the cyclometalated iridium complex according to the present invention, whether an iridium compound serving as a raw material is in a mixed state of geometrical isomers does not give particular effects.

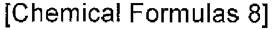

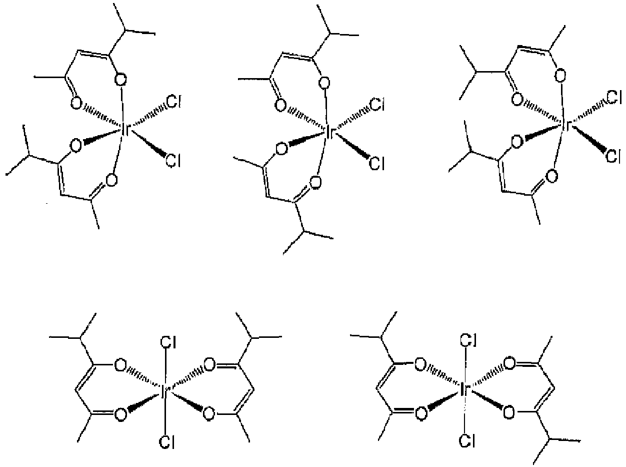

Examples of the iridium compounds represented by General Formula (1) are illustrated in Chemical Formulas 9. However, the present invention is not limited to the iridium compounds. Among the iridium compounds illustrated in Chemical Formulas 9, (Ir-1) to (Ir-3) are preferable, and (lr-2) or (Ir-3) is more preferable.

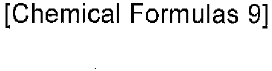

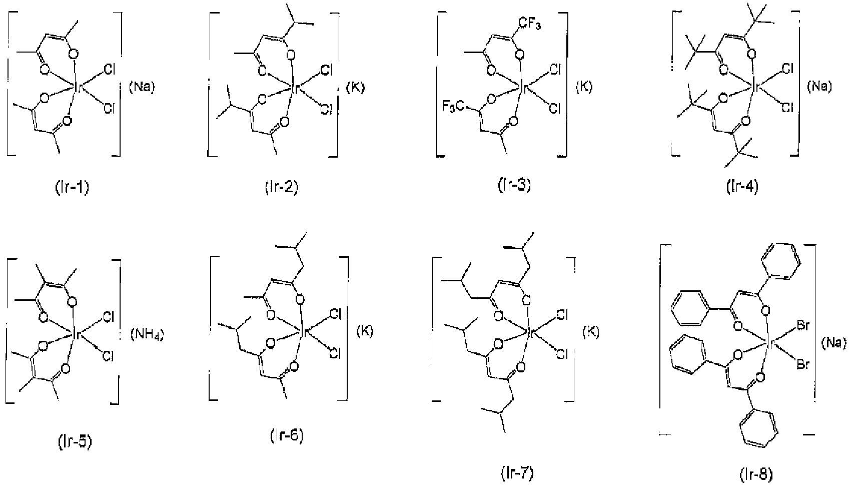

### (II) Aromatic bidentate ligand

In the method for producing the cyclometalated iridium complex, according to the present invention, as described above, the iridium compound (General Formula (1)) described above and the aromatic bidentate ligand represented by General Formula (2) are allowed to react each other.

In General Formula (2) representing the aromatic bidentate ligand according to the present invention, N represents a nitrogen atom. C represents a carbon atom. H represents a hydrogen atom. CyA represents a ring group of a five-membered ring or a six-membered ring containing a nitrogen atom, and bonds with iridium via the nitrogen atom. For CyA, a nitrogen-containing aromatic heterocyclic ring of a five-membered ring or a six-membered ring is preferable.

CyB represents a ring group of a five-membered ring or a six-membered ring containing a carbon atom, and bonds with iridium via the carbon atom. For CyB, an aromatic carbocyclic ring of a five-membered ring or a six-membered ring or an aromatic heterocyclic ring is preferable. An aromatic carbocyclic ring of a five-membered ring or a six-membered ring or a nitrogen-containing aromatic heterocyclic ring is more preferable. An aromatic carbocyclic ring of a five-membered ring or a six-membered ring is particularly preferable.

CyA and CyB may bond each other to form a new ring structure. In this case, with CyA and CyB bonding each other, it is preferable that a new saturated ring or a new unsaturated ring be formed. It is more preferable that a new unsaturated ring be formed.

A ring group of a five-membered ring or a six-membered ring containing a nitrogen atom may be, for example, a pyridine ring, a pyrimidine ring, a pyrazine ring, a pyridazine ring, a quinoline ring, an isoquinoline ring, a quinoxaline ring, a cinnoline ring, a phthalazine ring, a quinazoline ring, a naphthyridine ring, an imidazole ring, a pyrazole ring, a triazole ring, a tetrazole ring, an oxazole ring, an oxadiazole ring, a thiazole ring, or a thiadiazole ring. Among the rings described above, a pyridine ring, a pyrimidine ring, a quinoline ring, an isoquinoline ring, an imidazole ring, a pyrazole ring, or a triazole ring is preferable. A pyridine ring or an imidazole ring is more preferable.

A ring group of a five-membered ring or a six-membered ring containing a carbon atom may be, specifically, a benzene ring, a naphthalene ring, an anthracene ring, a carbazole ring, a fluorene ring, a furan ring, a thiophene ring, a pyridine ring, a pyrimidine ring, a pyrazine ring, a pyridazine ring, a quinoline ring, an isoquinoline ring, a quinoxaline ring, a cinnoline ring, a phthalazine ring, a quinazoline ring, a naphthyridine ring, an imidazole ring, a pyrazole ring, a triazole ring, a tetrazole ring, an oxazole ring, an oxadiazole ring, a thiazole ring, or a thiadiazole ring. A benzene ring, a naphthalene ring, a pyridine ring, or a pyrimidine ring is preferable. A benzene ring, a pyridine ring, or a pyrimidine ring is more preferable. A benzene ring is particularly preferable.

For a ring generated when CyA and CyB bond each other, with CyA and CyB bonding each other, it is preferable that a benzoquinoxaline ring, a benzoquinoline ring, a dibenzoquinoxaline ring, a dibenzoquinoline ring, or a phenanthridine ring be formed. It is more preferable that a benzoquinoline ring, a dibenzoquinoxaline ring, or a phenanthridine ring be formed. A benzo [h] quinoline ring is preferable as a benzoquinoline ring. A dibenzo [f,h] quinoxaline ring is preferable as a dibenzoquinoxaline ring. An imidazo [1,2-f] phenanthridine ring is preferable as a phenanthridine ring.

CyA and CyB, and a ring generated when CyA and CyB bond each other may be added with a substituent group. Substituent groups may each bond with adjacent ones to form a ring structure. CyA and CyB, and a ring generated when CyA and CyB bond each other may further undergo substitution.

Substituent groups to bond with CyA, CyB, and a ring generated when CyA and CyB bond each other include groups described below, for example.
- Alkyl group (preferably having a carbon number ranging from 1 to 30 inclusive, more preferably having a carbon number ranging from 1 to 20 inclusive, or particularly preferably having a carbon number ranging from 1 to 10 inclusive, such as, methyl, ethyl, iso-propyl, tert-butyl, n-octyl, n-decyl, n-hexadecyl, cyclopropyl, cyclopentyl, and cyclohexyl.)
- Alkenyl group (preferably having a carbon number ranging from 2 to 30 inclusive, more preferably having a carbon number ranging from 2 to 20 inclusive, or particularly preferably having a carbon number ranging from 2 to 10 inclusive, such as, vinyl, allyl, 2-butenyl, and 3-pentenyl.)
- Alkynyl group (preferably having a carbon number ranging from 2 to 30 inclusive, more preferably having a carbon number ranging from 2 to 20 inclusive, or particularly preferably having a carbon number ranging from 2 to 10 inclusive, such as, propargyl and 3-pentynyl.)
- Aryl group (preferably having a carbon number ranging from 6 to 30 inclusive, more preferably having a carbon number ranging from 6 to 20 inclusive, or particularly preferably having a carbon number ranging from 6 to 12 inclusive, such as, phenyl, p-methyl phenyl, naphtyl, and anthranil.)
- Amino group (preferably having a carbon number ranging from 0 to 30 inclusive, more preferably having a carbon number ranging from 0 to 20 inclusive, or particularly preferably having a carbon number ranging from 0 to 10 inclusive, such as, amino, methyl amino, dimethyl amino, diethyl amino, dibenzyl amino, diphenyl amino, and ditolyl amino.)
- Alkoxy group (preferably having a carbon number ranging from 1 to 30 inclusive, more preferably having a carbon number ranging from 1 to 20 inclusive, or particularly preferably having a carbon number ranging from 1 to 10 inclusive, such as, methoxy, ethoxy, butoxy, and 2-ethylhexyloxy.)
- Aryloxy group (preferably having a carbon number ranging from 6 to 30 inclusive, more preferably having a carbon number ranging from 6 to 20 inclusive, or particularly preferably having a carbon number ranging from 6 to 12 inclusive, such as, phenyloxy, 1-naphthyloxy, and 2-naphthyloxy.)
- Heterocyclic oxy group (preferably having a carbon number ranging from 1 to 30 inclusive, more preferably having a carbon number ranging from 1 to 20 inclusive, or particularly preferably having a carbon number ranging from 1 to 12 inclusive, such as, pyridyloxy, pyrazyloxy, pyrimidyloxy, and quinolyloxy.)
- Acyl group (preferably having a carbon number ranging from 1 to 30 inclusive, more preferably having a carbon number ranging from 1 to 20 inclusive, or particularly preferably having a carbon number ranging from 1 to 12 inclusive, such as, acetyl, benzoyl, formyl, and pivaloyl.)
- Alkoxycarbonyl group (preferably having a carbon number ranging from 2 to 30 inclusive, more preferably having a carbon number ranging from 2 to 20 inclusive, or particularly preferably having a carbon number ranging from 2 to 12 inclusive, such as, methoxycarbonyl and ethoxycarbonyl.)
- Aryloxycarbonyl group (preferably having a carbon number ranging from 7 to 30 inclusive, more preferably having a carbon number ranging from 7 to 20 inclusive, or particularly preferably having a carbon number ranging from 7 to 12 inclusive, such as, phenyloxycarbonyl.)
- Acyloxy group (preferably having a carbon number ranging from 2 to 30 inclusive, more preferably having a carbon number ranging from 2 to 20 inclusive, or particularly preferably having a carbon number ranging from 2 to 10 inclusive, such as, acetoxy and benzoyloxy.)
- Acylamino group (preferably having a carbon number ranging from 2 to 30 inclusive, more preferably having a carbon number ranging from 2 to 20 inclusive, or particularly preferably having a carbon number ranging from 2 to 10 inclusive, such as, acetylamino and benzoylamino.)
- Alkoxycarbonylamino group (preferably having a carbon number ranging from 2 to 30 inclusive, more preferably having a carbon number ranging from 2 to 20 inclusive, or particularly preferably having a carbon number ranging from 2 to 12 inclusive, such as, methoxycarbonylamino.)
- Aryloxycarbonylamino group (preferably having a carbon number ranging from 7 to 30 inclusive, more preferably having a carbon number ranging from 7 to 20 inclusive, or particularly preferably having a carbon number ranging from 7 to 12 inclusive, such as, phenyloxycarbonylamino.)
- Sulfonylamino group (preferably having a carbon number ranging from 1 to 30 inclusive, more preferably having a carbon number ranging from 1 to 20 inclusive, or particularly preferably having a carbon number ranging from 1 to 12 inclusive, such as, methansulfonylamino and benzensulfonylamino.)
- Sulfamoyl group (preferably having a carbon number ranging from 0 to 30 inclusive, more preferably having a carbon number ranging from 0 to 20 inclusive, or particularly preferably having a carbon number ranging from 0 to 12 inclusive, such as, sulfamoyl, methylsulfamoyl, dimethylsulfamoyl, and phenylsulfamoyl.)
- Carbamoyl group (preferably having a carbon number ranging from 1 to 30 inclusive, more preferably having a carbon number ranging from 1 to 20 inclusive, or particularly preferably having a carbon number ranging from 1 to 12 inclusive, such as, carbamoyl, methylcarbamoyl, diethylcarbamoyl, and phenylcarbamoyl.)
- Alkylthio group (preferably having a carbon number ranging from 1 to 30 inclusive, more preferably having a carbon number ranging from 1 to 20 inclusive, or particularly preferably having a carbon number ranging from 1 to 12 inclusive, such as, methylthio and ethylthio.)
- Arylthio group (preferably having a carbon number ranging from 6 to 30 inclusive, more preferably having a carbon number ranging from 6 to 20 inclusive, or particularly preferably having a carbon number ranging from 6 to 12 inclusive, such as, phenylthio.)
- Heterocyclicthio group (preferably having a carbon number ranging from 1 to 30 inclusive, more preferably having a carbon number ranging from 1 to 20 inclusive, or particularly preferably having a carbon number ranging from 1 to 12 inclusive, such as, pyridylthio, 2-benzimizolylthio, 2-benzoxazolylthio, and 2-benzthiazolylthio.)
- Sulphonyl group (preferably having a carbon number ranging from 1 to 30 inclusive, more preferably having a carbon number ranging from 1 to 20 inclusive, or particularly preferably having a carbon number ranging from 1 to 12 inclusive, such as, mesyl and tosyl.)
- Sulfinyl group (preferably having a carbon number ranging from 1 to 30 inclusive, more preferably having a carbon number ranging from 1 to 20 inclusive, or particularly preferably having a carbon number ranging from 1 to 12 inclusive, such as, methanesulfinyl and bezenensulfinyl.)
- Ureido group (preferably having a carbon number ranging from 1 to 30 inclusive, more preferably having a carbon number ranging from 1 to 20 inclusive, or particularly preferably having a carbon number ranging from 1 to 12 inclusive, such as, ureido, methylureido, and phenylureido.)
- Phosphoric amide group (preferably having a carbon number ranging from 1 to 30 inclusive, more preferably having a carbon number ranging from 1 to 20 inclusive, or particularly preferably having a carbon number ranging from 1 to 12 inclusive, such as, diethylphosphoric amide and phenylphosphoric amide.)
- Hydroxyl group, mercapto group, and halogen atom (such as, fluorine atom, chlorine atom, bromine atom, and iodine atom), cyano group, sulfo group, carboxyl group, nitro group, trifluoromethyl group, hydroxamic acid group, sulfino group, hydrazino group, imino group, and heterocyclic group (preferably having a carbon number ranging from 1 to 30 inclusive, or more preferably having a carbon number ranging from 1 to 12 inclusive, and, as a hetero atom, such as, nitrogen atom, oxygen atom, and sulfur atom, and, specifically, imidazolyl, pyridyl, quinolyl, furyl, thienyl, piperidyl, morpholino, benzoxazolyl, benzimidazolyl, benzthiazolyl, carbazolyl group, and azepinyl group.)
- Silyl group (preferably having a carbon number ranging from 3 to 40 inclusive, more preferably having a carbon number ranging from 3 to 30 inclusive, or particularly preferably having a carbon number ranging from 3 to 24 inclusive, such as, trimethylsilyl and triphenylsilyl.)
- Silyloxy group (preferably having a carbon number ranging from 3 to 40 inclusive, more preferably having a carbon number ranging from 3 to 30 inclusive, or particularly preferably having a carbon number ranging from 3 to 24 inclusive, such as, trimethylsilyloxy and triphenylsilyloxy.)

Among the substituent groups described above, an alkyl group, an aryl group, an amino group, an alkoxy group, an aryloxy group, a halogen atom, a cyano group, a trifluoromethyl group, a heterocyclic group, or a silyl group is preferable. An alkyl group, an aryl group, a halogen atom, a cyano group, or a heterocyclic group is more preferable. An alkyl group or an aryl group is particularly preferable. Preferable ranges for the substituent groups are as described above. Substitution may be further performed with the substituent groups described above. Substituent groups may each bond with adjacent ones to form a ring structure.

For a form desirable for an aryl group or a heterocyclic group, a dendron (group having a regular tree-branch structure where an atom or a ring serves as a branch point) is preferable. Examples of dendrons include structures described in WO 02/067343, Japanese Patent Application Publication Laid-Open No. 2003-231692, WO 2003/079736, WO 2006/097717, and WO 2016/006523, for example.

A specific preferable structure for the aromatic bidentate ligand represented by General Formula (2) used in the present invention may be, for example, one of formulas represented by General Formulas (7) to (14) illustrated in Chemical Formulas 10. Among the formulas, the formula having the structure represented by General Formula (7) or (10) is more preferable. 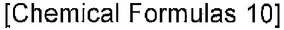 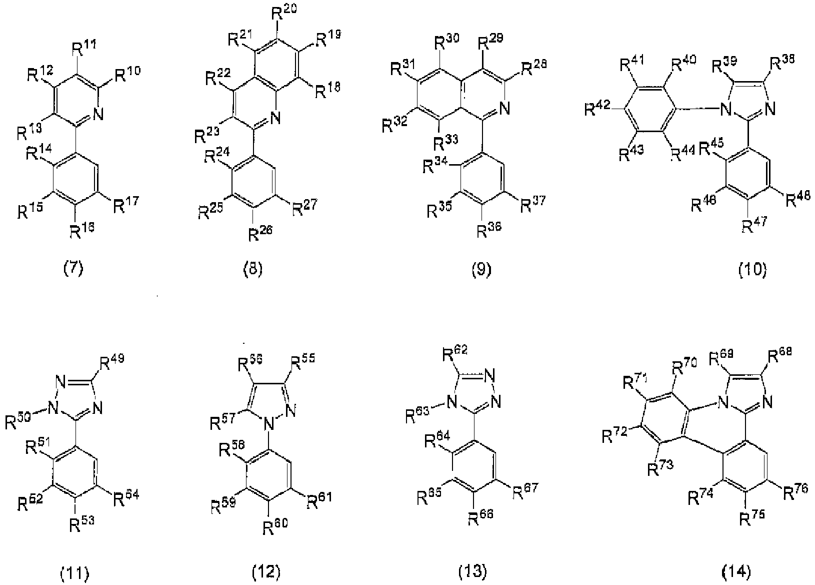 (In Formulas (7) to (14), each of R¹⁰ to R⁷⁶, independently, represents a hydrogen atom or a substituent group. Substituent groups may each bond with adjacent ones to further form a ring structure. Substituent groups and preferable ranges for R¹⁰ to R⁷⁶ are identical to the substituent groups and the preferable ranges described for CyA and CyB.)

### (III) β-diketonate salt

In the method for producing the cyclometalated iridium complex, according to the present invention, the iridium compound represented by General Formula (1) and the aromatic heterocyclic bidentate ligand represented by General Formula (2) are allowed to react each other under coexistence of the β-diketonate salt represented by General Formula (4).

In the β-diketonate salt represented by General Formula (4), M represents alkali metal or alkali metal earth metal. Alkali metal is preferable. Specifically, lithium, sodium, or potassium is preferable. Sodium is more preferable.

For m, 1 or 2 is represented. When M is alkali metal, m = 1. When M is alkali earth metal, m = 2. For m, 1 is preferable.

For each of R⁷ and R⁹, an alkyl group or an aryl group is preferable. An alkyl group is particularly preferable. An alkyl group substituted with halogen atoms (preferably, fluorine) is also preferable. Specifically, a methyl group, an ethyl group, a normal-propyl group, an isopropyl group, a normal-butyl group, an isobutyl group, a tert-butyl group, or a trifluoromethyl group is preferable. For R⁸, a hydrogen atom or an alkyl group is preferable. A hydrogen atom or a methyl group is more preferable. A hydrogen atom is particularly preferable.

In the method for producing the cyclometalated iridium complex, according to the present invention, it is preferable that the β-diketonate salt represented by General Formula (4) be added with crystal water.

### (IV) Preferable conditions of reaction

In the method for producing the cyclometalated iridium complex, according to the present invention, the iridium compound represented by Genera! Formula (1) and the aromatic bidentate ligand represented by General Formula (2) are allowed to react each other under coexistence of the β-diketonate salt represented by General Formula (4) in a reaction system. Conditions of reaction preferable for the method will be described herein.

In the method for producing the cyclometalated iridium complex, according to the present invention, it is preferable that a solvent be used. Preferable solvents include, for example, alcohols, saturated aliphatic hydrocarbons, esters, ethers, nitriles, non-proton type polar solvents, ketons, amides, aromatic hydrocarbons, nitrogen-containing aromatic compounds, ionic liquids, and water. Among the preferable solvents, alcohols, saturated aliphatic hydrocarbons, esters, ethers, non-proton type polar solvents, or amides are more preferable. Alcohols or non-proton type polar solvents (e.g., DMF and DMSO) are particularly preferable. Alcohols (preferably having a carbon number ranging from 1 to 30 inclusive, more preferably having a carbon number ranging from 1 to 20 inclusive, or further preferably having a carbon number ranging from 1 to 10 inclusive) are further particularly preferable. Among the alcohols, diol (preferably having a carbon number ranging from 1 to 30 inclusive, more preferably having a carbon number ranging from 1 to 20 inclusive, or further preferably having a carbon number ranging from 1 to 10 inclusive) is most preferable. Specifically, ethylene glycol, diethylene glycol, triethylene glycol, 1,2-propanediol, 1,3-propanediol, or 1,3-butanediol is preferable.

One kind of the solvents described above may be solely used. Two or more kinds of the solvents described above combined to each other may be used.

In the method for producing the cyclometalated iridium complex, according to the present invention, a concentration of the iridium compound represented by General Formula (1) in the reaction system is not particularly limited. However, a concentration ranging from 0.001 moles/L to 10.0 moles/L inclusive is preferable. A concentration ranging from 0.001 moles/L to 1.0 mole/L inclusive is more preferable. A concentration ranging from 0.01 moles/L to 1.0 mole/L inclusive is further preferable. A concentration ranging from 0.05 moles/L to 0.5 moles/L inclusive is particularly preferable.

In the method for producing the cyclometalated iridium complex, according to the present invention, for the aromatic heterocyclic bidentate ligand represented by General Formula (2), per mole of the iridium compound represented by General Formula (1), an amount of use ranging from 2 times moles or more to less than 10 times moles is preferable. An amount of use ranging from 2.5 times moles or more to less than 8 times moles is more preferable. An amount of use ranging from 3 times moles to 6 times moles inclusive is further preferable. An amount of use ranging from 3 times moles to 4.5 times moles inclusive is particularly preferable.

In the method for producing the cyclometalated iridium complex, according to the present invention, for the β-diketonate salt represented by General Formula (4) to be added into the reaction system, per mole of the iridium compound represented by General Formula (1), an amount of addition ranging from 0.01 times moles to 1000 times moles inclusive is preferable. An amount of addition ranging from 0.1 times moles to 100 times moles inclusive is more preferable. An amount of addition ranging from 1 times mole to 100 times moles inclusive is further preferable. An amount of addition ranging from 1 times mole to 30 times moles inclusive is particularly preferable.

In the method for producing the cyclometalated iridium complex, according to the present invention, it is preferable that the reaction system consisting of the iridium compound, the aromatic heterocyclic bidentate ligand, and the β-diketonate salt be heated. At this time, a specified reaction temperature ranges from 50°C or higher to lower than 300°C. A reaction temperature ranging from 50°C or higher to lower than 250°C is preferable. A reaction temperature ranging from 100°C or higher to lower than 250°C is more preferable. A reaction temperature ranging from 150°C or higher to lower than 250°C is further preferable. A reaction temperature ranging from 150°C or higher to lower than 220°C is particularly preferable. Heating means used in this time is not particularly limited. Specifically, an oil bath, a sand bath, a mantle heater, a block heater, or a heat-circulating jacket can be utilized for external heating. Further, heating through microwave irradiation can be utilized, for example.

In the method for producing the cyclometalated iridium complex, according to the present invention, a reaction time is not particularly limited. However, a reaction time ranging from 0.5 hours or longer to shorter than 72 hours is preferable. A reaction time ranging from 1 hour or longer to shorter than 48 hours is more preferable. A reaction time ranging from 1 hour or longer to shorter than 24 hours is further preferable.

In the method for producing the cyclometalated iridium complex, according to the present invention, it is preferable that the method be implemented under an inert gas (e.g., nitrogen and argon) atmosphere. It is also preferable that the method be implemented under normal pressure (under atmospheric pressure).

An order of mixing of the iridium compound, the aromatic heterocyclic bidentate ligand, and the β-diketonate salt contained in the reaction system is not particularly limited. When adding the β-diketonate salt, either of the β-diketonate salt and the iridium compound may first be separately added into a solvent. Both of the β-diketonate salt and the iridium compound may be simultaneously added into a solvent. A mixture of the β-diketonate salt and the iridium compound may be used. A composition consisting of the mixture of the iridium compound represented by General Formula (1) and the β-diketonate salt represented by General Formula (4) can be regarded as a raw material for producing the cyclometalated iridium complex. In the method for producing the cyclometalated iridium complex, according to the present invention, by allowing the composition and the aromatic heterocyclic bidentate ligand represented by General Formula (2) to react each other, the desired cyclometalated iridium complex can be produced.

The composition consisting of the mixture of the iridium compound and the β-diketonate salt, described above, can be obtained by mixing the iridium compound and the β-diketonate salt at a constant ratio. For the mixture ratio, per mole of the iridium compound represented by General Formula (1), the β-diketonate salt represented by General Formula (4) ranging from 0.01 times moles to 1000 times moles inclusive is preferable. The β-diketonate salt ranging from 0.1 times moles to 100 times moles inclusive is more preferable. The β-diketonate salt ranging from 1 times mole to 100 times moles inclusive is further preferable. The β-diketonate salt ranging from 1 time moles to 30 times moles inclusive is particularly preferable.

Preferable conditions when the composition consisting of the mixture of the iridium compound and the β-diketonate salt is allowed to react with the aromatic heterocyclic bidentate ligand are identical to the preferable conditions described above.

After having undergone an ordinary post-treatment method, the produced cyclometalated iridium complex may be purified as required or may not be purified. The produced cyclometalated iridium complex can thus be used as a high purity product. The post-treatment method may be one of or a combination of extraction, cooling, crystallization by adding water or an organic solvent, and distilling away of a solvent from a reactant mixture, for example. A purification method may be one of or a combination of recrystallization, distillation, sublimation, and column chromatography, for example.

With the methods described above, the cyclometalated iridium complex represented by General Formula (3) described above is produced. Meanings of, content of, and ranges of bondable substituent groups for N, C, CyA, and CyB in General Formula (3) are identical to the meanings of, the content of, and the ranges of bondable substituent groups for N, C, CyA, and CyB in General Formula (2).

The cyclometalated iridium complex obtained through the present invention can be preferably used as a phosphorescent material for use in an organic EL element, for example.

### (V) New iridium compound preferable for the method according to the present invention

As described above, the method for producing the cyclometalated iridium complex, according to the present invention, is a method including allowing the iridium compound represented by General Formula (1) and the aromatic bidentate ligand represented by General Formula (2) to react each other. In the method, the β-diketonate salt represented by General Formula (4) is allowed to coexist in the reaction system. The inventors, for example, have found the new iridium compound preferably used for the method for producing the cyclometalated iridium complex, according to the present invention.

The new iridium compound found by the inventors, for example, is the iridium compound represented by General Formula (15) described below.

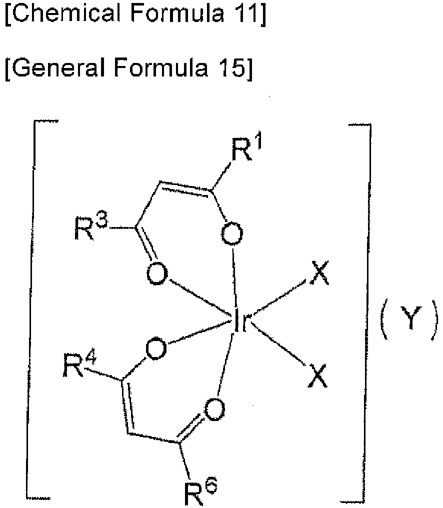

In the iridium compound represented by General Formula (15), according to the present invention, described above, each of R¹, R³, R⁴, and, R⁶, independently, is an alkyl group having a carbon number ranging from 1 to 10 inclusive. It is required that at least either R¹ or R³ be an alkyl group substituted with fluorine, and at least either R⁴ or R⁶ be an alkyl group substituted with fluorine.

The iridium compound according to the present invention is a compound belonging to the iridium compound represented by General Formula (1). In each of R¹, R³, R⁴, and, R⁶, an alkyl group having a limited carbon number is introduced. The alkyl group is then introduced with fluorine. The reason of why fluorine, i.e., an electron attractive group, is introduced is that an iridium-oxygen bond of the iridium compound weakens, improving a reactive property. By using the iridium compound, the desired cyclometalated iridium complex can be efficiently produced.

In the iridium compound represented by General Formula (15) according to the present invention, described above, it is particularly preferable that one of R¹ and R³ be a trifluoromethyl group, and another one be a methyl group, and one of R⁴ and R⁶ be a trifluoromethyl group, and another one be a methyl group.

As described above, the iridium compound represented by General Formula (15) according to the present invention, described above, is useful as a raw material for producing the cyclometalated iridium complex. Therefore, when the iridium compound is applied to the method for producing the cyclometalated iridium complex, according to the present invention, the iridium compound represented by General Formula (15) and the aromatic heterocyclic bidentate ligand can react each other. The composition consisting of the mixture of the iridium compound represented by General Formula (15) and the β-diketonate salt can further be used as a raw material for the cyclometalated iridium complex. For a mixture ratio for the mixture, a range identical to the range described above can be applied.

### [Effects of the Invention]

According to the present invention, a high purity cyclometalated iridium complex to be preferably used as a phosphorescent material for use in an organic EL element, for example, can be produced at higher yield. The present invention is a simple method relative to a conventional method for producing a cyclometalated iridium complex. Even such a method where the β-diketonate salt is simply added into the reaction system can significantly improve production efficiency of the cyclometalated iridium complex.

The new iridium compound according to the present invention is useful as a raw material for producing the cyclometalated iridium complex. By using the compound, the desired cyclometalated iridium complex can be efficiently produced.

### [Modes for Carrying out the Invention]

An embodiment of the present invention will be described hereinafter in detail. In the embodiment, pluralities of kinds of iridium compounds and aromatic heterocyclic bidentate ligands were allowed to react each other to produce cyclometalated iridium complexes. The embodiment is merely an example of the present invention. The present invention is not limited to the embodiment. Chemical Formula 11 illustrates structures of compounds (Ir1 to Ir3: iridium compounds, L1 to L2: aromatic heterocyclic bidentate ligands, T-1 to T-2: cyclometalated iridium complexes, and D-1 to D-2: byproducts (halogen cross-linked iridium dimers)) used and produced in the embodiment. The iridium compounds (Ir-1) to (Ir-3) used as raw materials in the embodiment were produced by allowing an iridium (III) chloride hydrate and a β-diketone ligand each having a required substituent group to thermally react in a water solution containing sodium hydrogen carbonate, as described below.

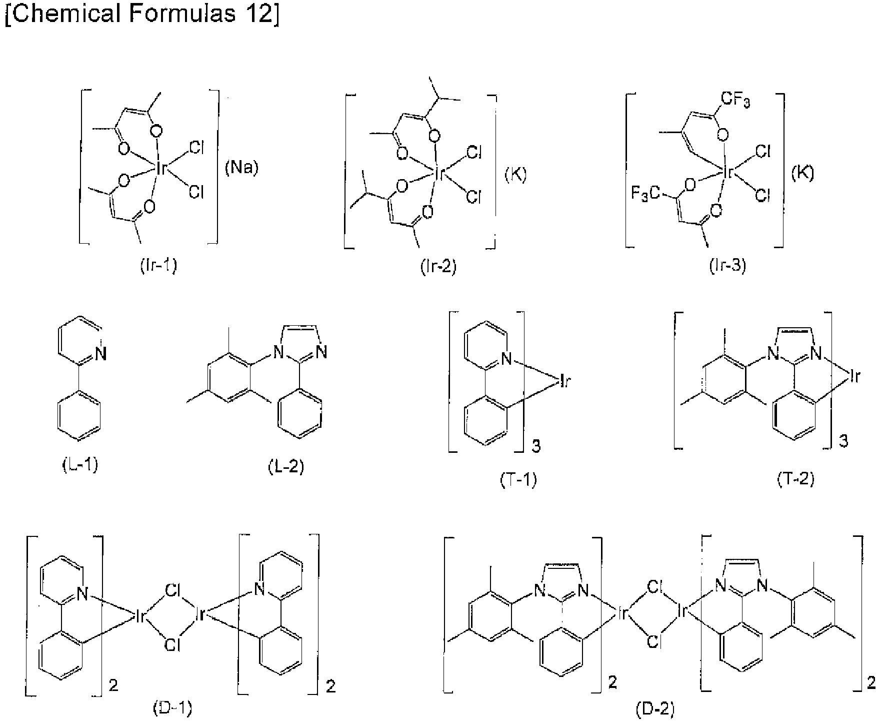

### [Method for producing iridium compound (Ir-1)]

Iridium chloride (III) trihydrate in an amount of 37.1 g (105 m moles) was dissolved in pure water in an amount of 200 ml in a three-neck flask. And then, 1 M sodium hydrogen carbonate in an amount of 200 ml was added. Further, acetylacetone in an amount of 20.5 ml (200 m moles) was added. Reaction was facilitated at a temperature of 95°C for ten hours. After the reaction, the solution was dried through vacuum dehydration. And then, methanol in an amount of 400 ml was added. After reflux for eight hours, the solution was filtered. The colature was condensed. Cold methanol was added. Crystals of the orange-colored iridium compound (Ir-1) in an amount of 13.0 g were obtained. Isolated yield was 26.8%.

### [Method for producing iridium compound (Ir-2)]

Iridium chloride (III) trihydrate in an amount of 40.6 g (115 m moles) was dissolved in pure water in an amount of 530 ml in a three-neck flask. And then, 5-methyl-2,4-hexanedione in an amount of 45.7 g (357 m moles) was added. Reaction was facilitated at a temperature of 95°C for one hour. Potassium hydrogen carbonate in an amount of 47.5 g (475 m moles) was added little by little. A pH adjustment was made to approximately pH8. Further, reaction was facilitated through heating for five hours. After the reaction, the solution was left for one night. Hexane was used to extract and remove unreacted 5-methyl-2,4-hexanedione from a supernatant water layer. And then, ethyl acetate was used to extract the iridium compound (Ir-2). The extraction liquid was condensed and dried. Rough crystals of the orange-colored iridium compound (Ir-2) in an amount of 12 g were obtained. The rough crystals were column-purified. Crystals of the orange-colored iridium compound (Ir-2) in an amount of 10.2 g were obtained. Isolated yield was 16%.

### [Method for producing iridium compound (Ir-3)]

Iridium chloride (III) trihydrate in an amount of 4.0 g (11.0 m moles) and pure water in an amount of 43 ml were agitated in a three-neck flask under an argon atmosphere. And then, trifluoroacetylacetone in an amount of 5.26 g (34.11 m moles) was added. Under the argon atmosphere, reflux was facilitated for one hour. Further, potassium hydrogen carbonate in an amount of 4.52 g (45.11 m moles) was added. Reaction was facilitated at a temperature of 90°C for five hours. After the reaction, the solution was left for one night. Chloroform was used to extract and remove unreacted trifluoroacetylacetone from a supernatant water layer. And then, ethyl acetate was used to extract the iridium compound (Ir-3). The extraction liquid was condensed and dried. Rough bodies of the brown-colored iridium compound (Ir-3) in an amount of 1.8 g were obtained. The rough bodies were column-purified. Solids of the orange-colored iridium compound (Ir-3) in an amount of 1.5 g were obtained. Isolated yield was 20%.

### <Example 1> Synthesizing (T-1) (when adding β-diketonate salt into reaction system)

The iridium compound (Ir-1) in an amount of 145.3 mg (0.3 m moles), the ligand (L-1) in an amount of 279.0 mg (1.8 m moles), sodium acetylacetonate hydrate serving as a β-diketonate salt in an amount of 91.6 mg (0.75 m moles), and, ethylene glycol in an amount of 2.5 ml were allowed to thermally react in a three-neck flask under an argon atmosphere at a temperature of 180°C for 17 hours. After the reaction, the reaction solution was cooled to a room temperature. Separated yellow solids were cleaned with methanol. As a result of analysis of ¹H-NMR, the separated yellow solids were the desired iridium complex (T-1). Yield was 80%.

### <Comparative Example 1> Synthesizing (T-1) (when not adding β-diketonate salt into reaction system)

The iridium compound (Ir-1) in an amount of 145.3 mg (0.3 m moles), the ligand (L-1) in an amount of 279.0 mg (1.8 m moles), and ethylene glycol in an amount of 2.5 ml were allowed to thermally react in a three-neck flask under an argon atmosphere at a temperature of 180°C for 17 hours. After the reaction, the reaction solution was cooled to a room temperature. Separated yellow solids were cleaned with methanol. As a result of analysis of ¹H-NMR, the separated yellow solids were a mixture of (T-1) and (D-1). Yield of (T-1) and (D-1) was calculated to 71% and 22%, respectively, based on integrated values of ¹H-NMR.

### <Example 2> Synthesizing (T-1) (when adding β-diketonate salt into reaction system)

The iridium compound (Ir-2) in an amount of 167.0 mg (0.3 m moles), the ligand (L-1) in an amount of 162.7 mg (1.05 m moles), sodium acetylacetonate hydrate serving as a β-diketonate salt in an amount of 44.0 mg (0.36 m moles), and ethylene glycol in an amount of 2.5 ml were allowed to thermally react in a three-neck flask under an argon atmosphere at a temperature of 180°C for 17 hours. After the reaction, the reaction solution was cooled to a room temperature. Separated yellow solids were cleaned with methanol. As a result of analysis of ¹H-NMR, the separated yellow solids were the desired iridium complex (T-1). Yield was 87%.

### <Comparative Example 2> Synthesizing (T-1) (when not adding β-diketonate salt into reaction system)

The iridium compound (Ir-2) in an amount of 167.0 mg (0.3 m moles), the ligand (L-1) in an amount of 162.7 mg (1.05 m moles), and ethylene glycol in an amount of 2.5 ml were allowed to thermally react in a three-neck flask under an argon atmosphere at a temperature of 180°C for 17 hours. After the reaction, the reaction solution was cooled to a room temperature. Separated yellow solids were cleaned with methanol. As a result of analysis of ¹H-NMR, the separated yellow solids were a mixture of (T-1) and (D-1). Yield of (T-1) and (D-1) was calculated to 22% and 73%, respectively, based on integrated values of ¹H-NMR.

### <Example 3> Synthesizing (T-2) (when adding β-diketonate salt into reaction system)

The iridium compound (Ir-2) in an amount of 167.0 mg (0.3 m moles), the ligand (L-2) in an amount of 472.2 mg (1.8 m moles), sodium acetylacetonate hydrate serving as a β-diketonate salt in an amount of 366.3 mg (3.0 m moles), and ethylene glycol in an amount of 2.5 ml were allowed to thermally react in a three-neck flask under an argon atmosphere at a temperature of 180°C for 17 hours. After the reaction, the reaction solution was cooled to a room temperature. Separated yellow solids were cleaned with methanol. As a result of analysis of ¹H-NMR, the separated yellow solids were the desired iridium complex (T-2). Yield was 63%.

### <Comparative Example 3> Synthesizing (T-2) (when not adding β-diketonate salt into reaction system)

The iridium compound (Ir-2) in an amount of 167.0 mg (0.3 m moles), the ligand (L-2) in an amount of 472.2 mg (1.8 m moles), and ethylene glycol in an amount of 2.5 ml were allowed to thermally react in a three-neck flask under an argon atmosphere at a temperature of 180°C for 17 hours. After the reaction, the reaction solution was cooled to a room temperature. Separated yellow solids were cleaned with methanol. As a result of analysis of ¹H-NMR, the separated yellow solids were a mixture of (T-2) and (D-2). Yield of (T-2) and (D-2) was calculated to 27% and 20%, respectively, based on integrated values of ¹H-NMR.

### <Example 4> Synthesizing (T-2) (when adding β-diketonate salt into reaction system)

The iridium compound (Ir-1) in an amount of 145.3 mg (0.3 m moles), the ligand (L-2) in an amount of 472.2 mg (1.8 m moles), sodium acetylacetonate hydrate serving as a β-diketonate salt in an amount of 183.2 mg (1.5 m moles), and ethylene glycol in an amount of 2.5 ml were allowed to thermally react in a three-neck flask under an argon atmosphere at a temperature of 180°C for 17 hours. After the reaction, the reaction solution was cooled to a room temperature. Separated yellow solids were cleaned with methanol. As a result of analysis of ¹H-NMR, the separated yellow solids were the desired iridium complex (T-2). Yield was 52%.

### <Comparative Example 4> Synthesizing (T-2) (when not adding β-diketonate salt into reaction system)

The iridium compound (Ir-1) in an amount of 145.3 mg (0.3 m moles), the ligand (L-2) in an amount of 472.2 mg (1.8 m moles), and ethylene glycol in an amount of 2.5 ml were allowed to thermally react in a three-neck flask under an argon atmosphere at a temperature of 180°C for 17 hours. After the reaction, the reaction solution was cooled to a room temperature. Separated yellow solids were cleaned with methanol. As a result of analysis of ¹H-NMR, the separated yellow solids were a mixture of (T-2) and (D-2). Yield of both (T-2) and (D-2) was calculated to 13% based on integrated values of¹H-NMR.

### <Example 5> Synthesizing (T-2) (when adding β-diketonate salt into reaction system)

The iridium compound (lr-3) in an amount of 182.5 mg (0.3 m moles), the ligand (L-2) in an amount of 472.2 mg (1.8 m moles), sodium acetylacetonate hydrate serving as a β-diketonate salt in an amount of 366.3 mg (3.0 m moles), and ethylene glycol in an amount of 2.5 ml were allowed to thermally react in a three-neck flask under an argon atmosphere at a temperature of 180°C for 34 hours. After the reaction, the reaction solution was cooled to a room temperature. Separated yellow solids were cleaned with methanol. As a result of analysis of ¹H-NMR, the separated yellow solids were the desired iridium complex (T-2). Yield was 68%.

### <Example 6> Synthesizing (T-2) (when adding β-diketonate salt into reaction system)

The iridium compound (Ir-2) in an amount of 167.0 mg (0.3 m moles), the ligand (L-2) in an amount of 472.2 mg (1.8 m moles), sodium acetylacetonate hydrate serving as a β-diketonate salt in an amount of 366.3 mg (3.0 m moles), and ethylene glycol in an amount of 2.5 ml were allowed to thermally react in a three-neck flask under an argon atmosphere at a temperature of 160°C for 34 hours. After the reaction, the reaction solution was cooled to a room temperature. Separated yellow solids were cleaned with methanol. As a result of analysis of ¹H-NMR, the separated yellow solids were the desired iridium complex (T-2). Yield was 60%.

As the results of experiments described above, with Examples 1 to 6 of the production method according to the present invention, where the β-diketonate salt is added into the reaction system, only the desired tris-cyclometalated iridium complexes can be obtained. On the other hand, it has been found that, with a conventional production method where the β-diketonate salt is not added into the reaction system, byproducts mix into the target tris-cyclometalated iridium complexes, significantly lowering yield and degrees of purity of the desired cyclometalated iridium complexes.

In Examples 3 to 5, (T-2) has been produced as the cyclometalated iridium complex. The iridium compounds applied in the examples can be ordered as (Ir-3), (Ir-2), and (Ir-1) in a descending order of yield. As a result, it can be understood that, in General Formula (1), when at least either R¹ or R³ is an alkyl group substituted with fluorine, and at least either R⁴ or R⁶ is an alkyl group substituted with fluorine, yield of the desired cyclometalated iridium complex (T-2) has significantly improved to 68%. This is due to that, by introducing an electron attractive group, i.e., a fluorine atom, into an iridium compound, a bond between iridium and a ligand in the iridium compound (Ir-3) weakens, allowing the ligand (L-2) to easily react.

As described above, by using the production method according to the present invention, an amount of use of an expensive organic ligand can be reduced. In addition, a high purity cyclometalated iridium complex can be obtained, significantly lowering costs regarding purification and production.

### [Industrial Applicability]

According to the present invention, a high purity cyclometalated iridium complex to be used as a phosphorescent material for use in an organic EL element, for example, can be produced at higher yield. Further, by using the cyclometalated iridium complex produced with the method according to the present invention, a high efficiency organic EL element, for example, can be produced. The present invention is highly useful as a method for producing a cyclometalated iridium complex to be used as a phosphorescent material for use in organic electrolytic light-emitting (EL) elements, organic electrochemical light-emitting (ECL) elements, light-emitting sensors, photosensitive dyes, photocatalysts, light-emitting probes, and various light sources, for example.

## Claims

1. A method for producing an iridium complex, in a method for producing a cyclometalated iridium complex represented by General Formula (3) described below including allowing an iridium compound represented by General Formula (1) described below and an aromatic bidentate ligand represented by General Formula (2) described below to react each other, the method comprising: allowing a β-diketonate salt represented by General Formula (4) described below to coexist in a reaction system for reaction. 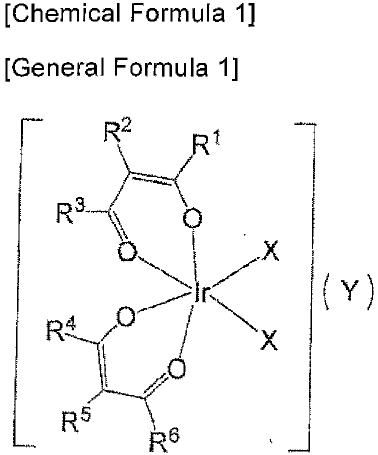 (In General Formula (1), Ir represents an iridium atom. O represents an oxygen atom. X represents a halogen atom. Y represents a counter cation. Each of R¹ to R⁶ is, independently, a hydrogen atom, an alkyl group, or an aryl group. Some or all of hydrogen atoms in the alkyl group or the aryl group may be substituted with halogen atoms. R¹ to R⁶ may each bond with adjacent ones to form a ring structure.) 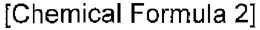 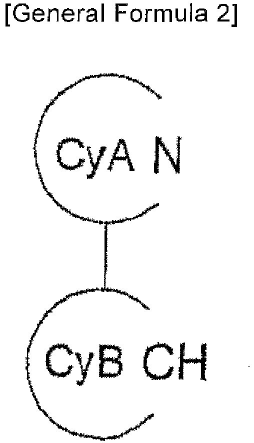 (In General Formula (2), N represents a nitrogen atom. C represents a carbon atom. H represents a hydrogen atom. CyA represents a ring group of a five-membered ring or a six-membered ring containing a nitrogen atom. CyB represents a ring group of a five-membered ring or a six-membered ring containing a carbon atom. CyA and CyB may bond each other to form a ring structure.) 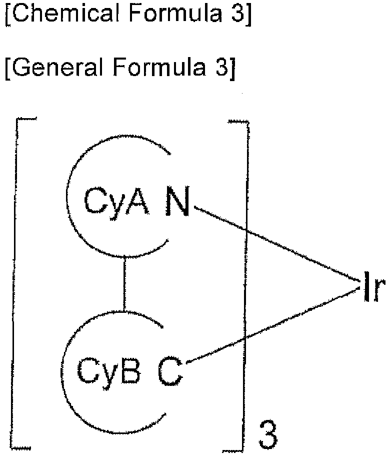 (In General Formula (3), Ir represents an iridium atom. N represents a nitrogen atom. C represents a carbon atom. X represents a halogen atom. CyA represents a ring group of a five-membered ring or a six-membered ring containing a nitrogen atom, and bonds with iridium via the nitrogen atom. CyB represents a ring group of a five-membered ring or a six-membered ring containing a carbon atom, and bonds with iridium via the carbon atom. CyA and CyB may bond each other to further form a ring structure.) 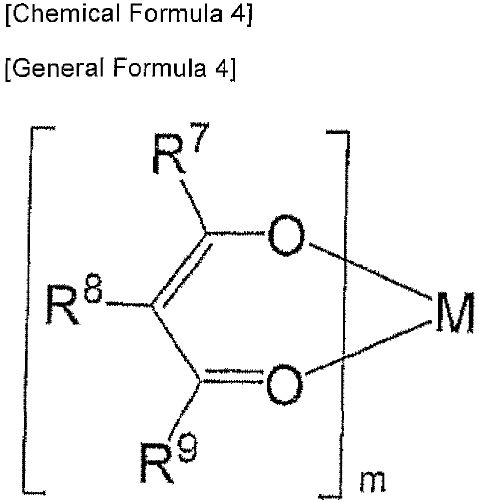 (In General Formula (4), M represents alkali metal or alkali earth metal. O represents an oxygen atom. For m, 1 or 2 is represented. When M is alkali metal, m = 1. When M is alkali earth metal, m = 2. Each of R⁷ to R⁹ is, independently, a hydrogen atom, an alkyl group, or an aryl group. Some or all of hydrogen atoms in the alkyl group or the aryl group may be substituted with halogen atoms. R⁷ to R⁹ may each bond with adjacent ones to form a ring structure.)

2. The production method according to claim 1,
wherein CyA is one of a pyridine ring, a pyrimidine ring, a pyrazine ring, a pyridazine ring, a quinoline ring, an isoquinoline ring, a quinoxaline ring, a cinnoline ring, a phthalazine ring, a quinazoline ring, a naphthyridine ring, an imidazole ring, a pyrazole ring, a triazole ring, a tetrazole ring, an oxazole ring, an oxadiazole ring, a thiazole ring, and a thiadiazole ring, and
wherein CyB is one of a benzene ring, a naphthalene ring, an anthracene ring, a carbazole ring, a fluorene ring, a furan ring, a thiophene ring, a pyridine ring, a pyrimidine ring, a pyrazine ring, a pyridazine ring, a quinoline ring, an isoquinoline ring, a quinoxaline ring, a cinnoline ring, a phthalazine ring, a quinazoline ring, a naphthyridine ring, an imidazole ring, a pyrazole ring, a triazole ring, a tetrazole ring, an oxazole ring, an oxadiazole ring, a thiazole ring, and a thiadiazole ring.

3. The production method according to claim 1 or 2,
wherein CyA is a pyridine ring or an imidazole ring, and
wherein CyB is a benzene ring.

4. A composition comprising a mixture consisting of:
the iridium compound represented by General Formula (1); and
the β-diketonate salt represented by General Formula (4).

5. The composition according to claim 4, wherein a mixed moler ratio of the β-diketonate salt represented by General Formula (4) ranges from 0.01 times moles to 1000 times moles inclusive, per mole of the iridium compound represented by General Formula (1).

6. An iridium compound represented by General Formula (15). 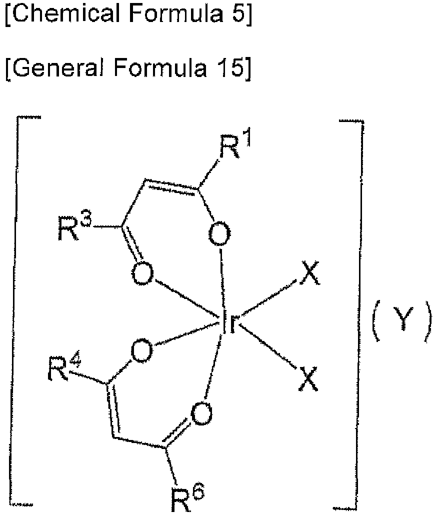 (In General Formula (15), Ir represents an iridium atom. O represents an oxygen atom. X represents a halogen atom. Y represents a counter cation. Each of R¹, R³, R⁴, and, R⁶ is, independently, an alkyl group having a carbon number ranging from 1 to 10 inclusive. However, at least either R¹ or R³ is an alkyl group substituted with fluorine, and at least either R⁴ or R⁶ is an alkyl group substituted with fluorine.)

7. The iridium compound according to claim 6,
wherein one of R¹ and R³ is a trifluoromethyl group, and another one is a methyl group, and
wherein one of R⁴ and R⁶ is a trifluoromethyl group, and another one is a methyl group.
